# EUROPÄISCHE PATENTSCHRIFT

(11) **EP 1 762 537 B1**
(45) Veröffentlichungstag und Bekanntmachung des Hinweises auf die Patenterteilung: **11.01.2012**
(21) Anmeldenummer: 06018562.6
(22) Anmeldetag: 05.09.2006
(51) Int. Cl.: B66F 9/075, B60K 15/07

(54) **Mobile Arbeitsmaschine mit einem druckbeaufschlagten Tank**
Mobile working machine with pressurised tank
Engin de travaux avec réservoir sous pression

(30) Priorität: 09.09.2005 DE 102005042938
(43) Veröffentlichungstag der Anmeldung: 14.03.2007
(73) Patentinhaber: STILL GmbH, 22113 Hamburg (DE)
(72) Erfinder: Kubusch, Dietmar, 21244 Buchholz (DE)
(74) Vertreter: Geirhos, Johann

(56) Entgegenhaltungen:
- EP-A2- 1 398 201
- JP-A- 7 223 447
- JP-A- 9 300 990
- JP-A- 62 286 832
- JP-A- 2001 040 705

## Beschreibung

Die Erfindung betrifft ein elektrisch betriebenes Flurförderzeug mit einem im Heckbereich angeordneten Gegengewicht, einem zwischen einer Vorderachse und einer Hinterachse angeordneten Gehäusefach und mit mindestens einem druckbeaufschlagten Tank, insbesondere zum Mitführen von bei Normalbedingungen gasförmigem Brennstoff.

Flurförderzeuge werden häufig mit Brennstoffen, die unter Normalbedingungen gasförmig sind, betrieben. Neben Brennstoffen auf Kohlenwasserstoffbasis wie Propan, Butan oder Erdgas kommt dabei zunehmend auch Wasserstoff zum Einsatz, der beispielsweise zum Betrieb einer Brennstoffzetteneinheit verwendet wird. Zur Bevorratung dieser Brennstoffe verfügt das Flurförderzeug zumeist über einen oder mehrere druckbeaufschlagte Tanks. Um eine möglichst große Menge des Brennstoffs speichern zu können, sind die Tanks zumeist mit relativ hohen Drücken, üblicherweise mehr als 25 bar und typischerweise in der Größenordnung von 200 bar, bei Wasserstoff sogar von 350 bar und in Einzelfällen von 700 bar beaufschlagt.

Bei mobilen Anwendungen wird im Allgemeinen angestrebt, Komponenten so leicht wie möglich zu gestalten, um beispielsweise die Nutzlast eines Fahrzeugs zu erhöhen. Bei Brennstofftanks nach dem Stand der Technik wird demzufolge versucht, diese möglichst leicht und dennoch stabil zu gestalten, weshalb beispielsweise Aluminiumlegierungen oder Verbundwerkstoffe Verwendung finden. Weiterhin sind Tanks nach dem Stand der Technik, um bei minimalem Materialeinsatz maximale Fülldrücke, also auch maximale Füllmengen zu erzielen, zumeist zylindrisch oder kugelförmig ausgeführt. Derartige Tanks besitzen jedoch eine schlechte Raumausnutzung, insbesondere, wenn zwei oder mehr davon nebeneinander angeordnet sind, da zwischen den Tanks beziehungsweise zwischen Tanks und einer zumeist gerade ausgeführten Gehäusewand ungenutzter Raum verbleibt. Eine Anordnung außerhalb des Fahrzeuggrundkörpers, wie bei mit Flüssiggas betriebenen Fahrzeugen häufig angewandt, vermeidet dies, hat jedoch den Nachteil, dass der Tank Umwelteinflüssen, insbesondere mechanischer Beschädigung oder Sonneneinstrahlung ungeschützt ausgesetzt ist und zudem die Zugänglichkeit des Fahrzeugs oder die Sicht der Bedienperson einschränkt.

Häufig werden Flurförderzeuge gleicher Grundkonzeption mit unterschiedlichen Antriebskonzepten, beispielsweise elektrisch mit einer Bleibatterie oder verbrennungsmotorisch mit flüssigen Kraftstoffen oder elektromotorisch mit einer Brennstoffzelleneinheit und gasförmigem Brennstoff oder verbrennungsmotorisch mit gasförmigem Treibstoff angeboten. Wesentlich für das Gewicht des Flurförderzeugs ist dabei unter anderem das Gewicht des Energiespeichers, also beispielsweise der Bleibatterie oder des Triebstofftanks. Insbesondere Flurförderzeuge mit elektrischem Antrieb und einer Bleibatterie weisen dabei bei gleicher Betriebsdauer ein relativ hohes Gewicht auf. Im Falle von Flurförderzeugen ist dies häufig gewünscht, da bei Flurförderzeugen auf diese Weise die Traktion verbessert wird oder das Gewicht der Batterie als Gegengewicht zu einer aufgenommenen Last dient.

Flurförderzeuge, deren Energieversorgung mittels Brennstoffzellen erfolgt, die mit einem gasförmigen Brennstoff, beispielsweise Wasserstoff, versorgt werden, weisen demgegenüber ein wesentlich niedrigeres Gewicht auf, wodurch die Nutzlast reduziert und damit die Produktivität des Flurförderzeugs verringert wird. Die Sicherheit des Flurförderzeugs ist ebenfalls geringer, da die Stabilität bei gleicher Last wesentlich geringer als bei einem äquivalenten Flurförderzeug mit Bleibatterie ist.

Die JP 2001-040705 A zeigt eine als Bagger ausgebildete Arbeitsmaschine, bei der die Gastanks zum Betrieb eines als Gasmotor ausgebildeten Verbrennungsmotors in einem Gegengewicht angeordnet sind.

Aus der JP 07-223447 A ist ein verbrennungs-motorisch betriebenes Flurförderzeug bekannt, bei dem der als Gasflasche ausgebildete Tank in einem Gegengewicht angeordnet ist.

Ein Flurförderzeug gemäß dem Oberbegriff des Anspruchs 1 ist aus der EP 1398201 A2 bekannt.

Der Erfindung liegt daher die Aufgabe zugrunde, einelektrisch betriebenes Flurförderzeug zu schaffen, das über eine hohe Betriebssicherheit und Einsatzdauer verfügt, bei optimaler Raumausnutzung einfach aufgebaut ist und einen besonders wirtschaftlichen Betrieb ermöglicht.

Diese Aufgabe wird erfindungsgemäß dadurch gelöst, dass mindestens ein an wesentliche Teile der Außenkontur des Tanks angepasster Formkörper vorgesehen ist, welcher aus einem Werkstoff großer Dichte gebildet ist, wobei der Tank in dem Formkörper aufgenommen ist und der mit dem Tank versehene Formkörper und eine Brennstoffzelleneinheit in dem Gehäusefach angeordnet sind. Als große Dichte ist dabei insbesondere eine Dichte von mehr als 6 kg/dm³, vorzugsweise von mehr als 7 kg/dm³, anzusehen. Dadurch wird der den Tank umgebende Raum, der aufgrund der komplexen Form des Tanks zumeist ungenutzt bleibt, mit schwerem Material ausgefüllt. Auf diese Weise wird die Traktionsleistung des Flurförderzeugs erheblich gesteigert und die Standsicherheit erhöht. Indem bei Flurförderzeugen nach dem Stand der Technik mit Luft gefülltes Volumen im Flurförderzeug durch den Formkörper ausgefüllt wird, wird zudem die Sicherheit des Fahrzeugs bei Undichtigkeiten des Brennstoffsystems verbessert, da weniger Umgebungsluft vorhanden ist, die zusammen mit dem Brennstoff ein zündfähiges Gemisch bilden könnte.

Vorteilhafterweise ist der Formkörper an die Kontur den Tank umgebender Komponenten angepasst. Dadurch wird der Leerraum zwischen Tank und umgebenden Komponenten möglichst vollständig gefüllt.

Es ist ebenfalls von Vorteil, wenn der Formkörper an wesentliche Teile der Außenkontur mindestens eines weiteren Tanks angepasst ist. Sind zwei oder mehr Tanks vorhanden, so ist der ungenutzte Raum, insbesondere bei zylindrischen oder kugelförmigen Tanks, besonders groß. Indem der Formkörper an die Kontur der Tanks angepasst ist, wird der Raum zwischen diesen besonders effektiv gefüllt.

In einer zweckmäßigen Ausgestaltung der Erfindung weist der Formkörper mindestens eine Ausnehmung mit zumindest annähernd kreisbogenförmigem Querschnitt zur Aufnahme mindestens eines Tanks auf. Tanks besitzen zumeist zylindrische oder kugelförmige Außenkonturen, die in einer derartigen Ausnehmung besonders fest umschlossen werden.

Es ist von Vorteil, wenn in der Ausnehmung zur Aufnahme des Tanks mindestens ein elastisches Element angeordnet ist. Dadurch liegt der Tank nicht direkt auf dem Formkörper auf und ist schwingungstechnisch von diesem entkoppelt. Der Verschleiß von Formkörper und Tank bei gegenseitigen, auch minimalen, Bewegungen wird deutlich verringert beziehungsweise vermieden.

In einer vorteilhaften Ausgestaltung der Erfindung ist der Formkörper aus einem Eisenwerkstoff, insbesondere Stahl oder Gusseisen, gebildet. Eisenwerkstoffe sind kostengünstig, einfach zu verarbeiten und weisen eine relativ hohe Dichte auf.

In einer weiteren vorteilhaften Ausgestaltung ist der Formkörper aus einer Bleilegierung gebildet. Blei besitzt eine große Dichte, ist relativ kostengünstig und leicht verformbar und dadurch auch an komplexe Geometrien gut anpassbar.

Es ist weiterhin zweckmäßig, wenn der Formkörper mindestens eine zumindest annähernd ebene Seitenfläche aufweist. Rahmenbauteile der mobilen Arbeitsmaschine, Gehäuse der mobilen Arbeitsmaschine oder von darin verwendeten Komponenten weisen zumeist ebenfalls plane Flächen auf, so dass eine besonders gute Anlage des Formkörpers daran gegeben ist. Die Einleitung von Kräften erfolgt dabei auf eine große Fläche verteilt, was schädliche punktuelle Belastungen des Formkörpers und/oder der mobilen Arbeitsmaschine und/oder deren Komponenten verhindert.

In einer weiteren zweckmäßigen Ausbildung der Erfindung weist der Formkörper mindestens zwei zumindest annähernd parallele Seitenflächen auf. Dadurch ist der Formkörper besonders gut im Fahrzeug anpassbar, da zu zwei Seiten hin Anlageflächen mit konstantem Abstand gegeben sind.

Vorteilhafterweise weist der Formkörper mindestens eine Befestigungsvorrichtung zur Verbindung des Formkörpers mit dem Flurförderzeug auf. Dadurch wird die Befestigung des Formköpers im Fahrzeug mit einfachen Mitteln möglich und der Formkörper kann zur Befestigung des Tanks, der aufgrund der angepassten Kontur von dem Formkörper sicher fixiert wird, verwendet werden.

Weitere Vorteile und Einzelheiten der Erfindung werden im Folgenden anhand des in der Zeichnung dargestellten Ausführungsbeispiels näher erläutert. Gleiche Teile sind mit gleichen Bezugszeichen gekennzeichnet. Dabei zeigt
- Figur 1: einen Gegengewichtsgabelstapler als Beispiel eines erfindungsgemäßen Flurförderzeugs,
- Figur 2: zwei druckbeaufschlagte Tanks mit drei erfindungsgemäßen Formkörpern sowie einer Einzeldarstellung von zwei Formkörpern,
- Figur 3: einen erfindungsgemäßen Formkörper zur Aufnahme von vier druckbeaufschlagten Tanks.

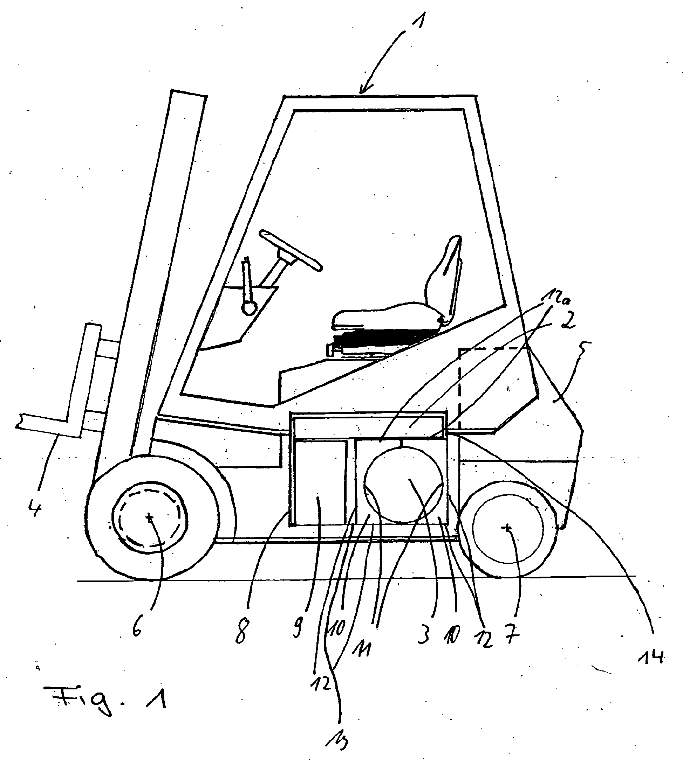

In Figur 1 ist ein Gegengewichtsgabelstapler 1 mit einer Brennstoffzelleneinheit 2 und einem druckbeaufschlagten Wasserstofftank 3 als Beispiel für eine erfindungsgemäße mobile Arbeitsmaschine gezeigt. Lasten werden auf einem hier nicht vollständig dargestellten Lastaufnahmemittel 4 aufgenommen und transportiert. Zum Ausgleich für das Gewicht der Last ist im Heckbereich des Gabelstaplers 1 ein Gegengewicht 5 angeordnet. Zwischen der Vorderachse 6 und der Hinterachse 7 des Gabelstaplers 1 ist ein Gehäusefach 8 angeordnet, das bei batterieelektrischem Betrieb des Gabelstaplers 1 zur Aufnahme der Batterie dient. Im gezeigten Gabelstapler 1 sind in diesem Gehäusefach 8 die Brennstoffzelleneinheit 2, der Wasserstofftank 3 sowie weitere, hier nicht im Detail dargestellte Hilfsaggregate 9 angeordnet. Der Wasserstofftank 3 besitzt eine für derartige Anwendungen nach dem Stand der Technik übliche zylindrische Grundform und ist bei mobilen Anwendungen vorzugsweise relativ leicht ausgeführt, beispielsweise durch Verwendung einer Aluminiumlegierung oder eines faserverstärkten Verbundwerkstoffs oder aber, bei Verwendung von Stahl, durch eine Minimierung der Wandstärke.

Der Wasserstofftank ist umgeben von zwei erfindungsgemäßen, große Dichte aufweisenden Formkörpern 10, die jeweils eine Ausnehmung 11 mit kreisbogenförmigem Querschnitt aufweisen, welche an die Außenkontur des Tanks 3 angepasst ist. Die Formkörper 10 weisen daher im Wesentlichen einen rechteckigen Querschnitt auf, der von der kreisbogenförmigen Ausnehmung 11 unterbrochen wird. Die der Ausnehmung 11 abgewandten Seiten 12 des Formkörpers 10 sind jeweils plan ausgeführt, so dass die Formkörper 10 großflächig an Boden 13 und Wand 14 des Gehäusefachs 8 aufliegen. Auch oberhalb des Tanks 3 steht somit eine ebene Fläche 12a zur Verfügung, auf der im gezeigten Ausführungsbeispiel die Brennstoffzelleneinheit 2 angeordnet ist. Die Befestigung der Formkörper 10 am Flurförderzeug 1 erfolgt über hier nicht dargestellte Schraubverbindungen, wodurch die Formkörper 10 gleichzeitig als Haltevorrichtung für den Tank 3 dienen. Die Brennstoffzelleneinheit 2 ist ebenfalls an den Formkörpern 10 befestigt, so dass keine eigenständige Befestigungsvorrichtung erforderlich ist.

Der von den Formkörpern 10 ausgefüllte Raum wird in Flurförderzeugen nach dem Stand der Technik nicht genutzt, so dass das durch die Formkörper 10 eingebrachte Gewicht vollständig als zusätzliches Gegengewicht genutzt wird.

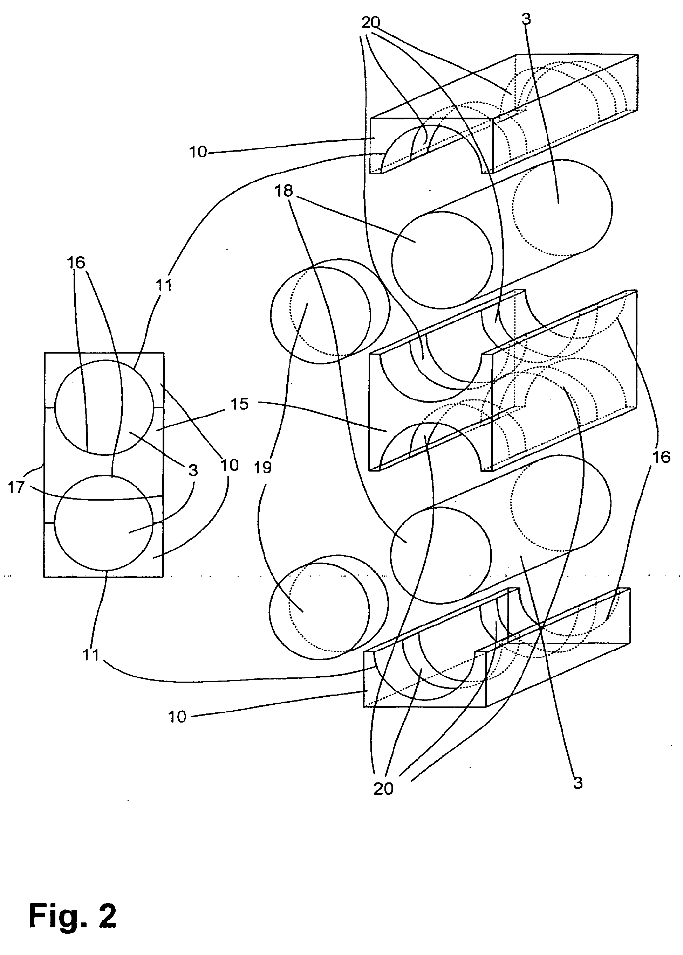

Figur 2 zeigt eine Anordnung von zwei druckbeaufschlagten zylinderförmigen Tanks 3, die von Formkörpern 10, 15 umgeben sind in Draufsicht (links) sowie in Explosionsdarstellung (rechts). Der zwischen den beiden Tanks 3 angeordnete Formkörper 15 weist zwei Ausnehmungen 16 mit kreisbogenförmigem Querschnitt auf, die zwischen zwei planparallelen Seiten 17 angeordnet sind. Die als Endstücke ausgebildeten Formkörper 10 sind identisch mit den in Figur 1 gezeigten Formkörpern 10 ausgeführt. Weitere Tanks 3 lassen sich unter Verwendung weiterer Formkörper 15 leicht zwischen die beiden Tanks 3 einfügen. Mit den gezeigten Formkörpern 10, 15 kann bei Verwendung standardisierter Tanks 3 durch Verwendung von zwei Typen von Formkörpern 10, 15 eine Tankanlage von nahezu beliebiger Anordnung und Größe aufgebaut werden. Für den Bereich des Tankbodens 18 ist ein weiterer Formkörper 19 vorgesehen, der an die gewölbte Form des Tankbodens 18 angepasst ist und zwischen die Formkörper 10 und 15 passt.

Sind zylindrische Tanks 3 unterschiedlicher Länge vorgesehen, können die Formkörper 10, 15 entweder als Meterware hergestellt und passend abgelängt werden. Es ist aber auch denkbar, Formkörper 10, 15 mit einer Länge, die kleiner oder gleich der des kürzesten zu verwendenden Tanks 3 ist, in Längsrichtung des Tanks 3 hintereinander anzuordnen und so Tanks 3 in beliebiger Länge abzudecken.

In den Ausnehmungen 11, 16 sind elastische Auflageelemente 20 angeordnet, die beispielsweise aus Gummi oder einem Polymerwerkstoff gebildet sind. Diese Auflageelemente 20 dämpfen Stöße und Vibrationen. Der Verschleiß der Tanks 3 und der Formkörper 10, 15 wird verringert, da diese nicht direkt aufeinander liegen und daher nicht aneinander reiben können. Werden die Formkörper 10, 15 gegeneinander gepresst, werden die Tanks 3 effektiv an einer Bewegung in ihrer Längsrichtung gehindert. so dass eine zusätzliche Sicherung entfallen kann.

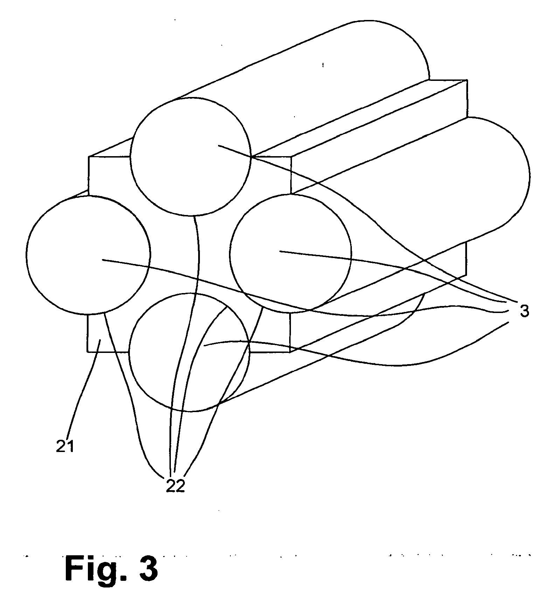

Figur 3 zeigt schematisch einen Formkörper 21 zur Aufnahme von vier Tanks 3 in einer von Figur 2 abweichenden Konfiguration. In diesem Fall ist nicht nur eine lineare Reihung der Tanks 3 möglich, sondern eine sich in zwei Raumrichtungen A, B erstreckende, durch die Anordnung der Ausnehmungen 22 im Formkörpers 21 stabilisierte Tankanlage. Der Abschluss kann dabei jeweils wieder mittels der als Endstücke ausgeführten Formkörper 10 erfolgen. Die Befestigung der Formkörper untereinander kann entweder durch geeignete, in die Formkörper integrierte Befestigungsvorrichtungen nach den Stand der Technik, beispielsweise Verschraubungen oder Nuten und darin geführte Nutsteine erfolgen oder aber, indem die Formkörper 10, 15,21 mittels Spannbändern zusammengehalten werden. Selbstverständlich sind auch andere Ausführungsformen der Formkörper 10, 15 ,21 denkbar, beispielsweise in Gestalt eines Formkörpers, der den Tank 3 vollständig umschließt. Bei einer derartigen Anordnung ist der Tank 3 optimal geschützt, jedoch der Einbau und ein gegebenenfalls notwendiger Tausch des Tanks 3 gegenüber der gezeigten Variante wesentlich schwieriger zu bewerkstelligen. Die Formkörper 10, 15, 21 können je nach Anforderungen aus einem Eisenwerkstoff, beispielsweise Grauguss oder auch Stahl, gebildet sein, oder aber aus Blei oder einer Bleilegierung oder einem anderen Werkstoff hinreichend hoher Dichte. Blei und Bleilegierungen zeichnen sich durch die hohe Dichte und leichte Verformbarkeit aus. Muss der Formkörper 10, 15, 21 jedoch große Kräfte aufnehmen und/oder übertragen, beispielsweise, weil an diesem weitere Komponenten befestigt werden sollen, ist eine Ausführung in Stahl vorzuziehen.

## Patentansprüche

1. Elektrisch betriebenes Flurförderzeug (1) mit einem im Heckbereich angeordneten Gegengewicht (5), einem zwischen einer Vorderachse (6) und einer Hinterachse (7) angeordneten Gehäusefach (8) und mit mindestens einem druckbeaufschlagten Tank (3), insbesondere zum Mitführen von bei Normalbedingungen gasförmigem Brennstoff, wobei der Tank (3) ein Wasserstofftank ist **dadurch gekennzeichnet dass**, mindestens ein an wesentliche Teile der Außenkontur des Tanks (3) angepasster Formkörper (10, 15, 19, 21) vorgesehen ist, welcher aus einem Werkstoff großer Dichte gebildet ist, wobei der Tank (3) in dem Formkörper (10, 15, 19, 21) aufgenommen ist und der mit dem Tank (3) versehene Formkörper (10, 15, 19, 21) und eine Brennstoffzelleneinheit (2) in dem Gehäusefach (8) angeordnet sind.

2. Flurförderzeug nach Anspruch 1, **dadurch gekennzeichnet, dass** der Formkörper (10, 15, 19, 21) an die Kontur den Tank (3) umgebender Komponenten (2, 13, 14) angepasst ist.

3. Flurförderzeug nach Anspruch 1 oder 2, **dadurch gekennzeichnet, dass** der Formkörper (10, 15, 19, 21) an wesentliche Teile der Außenkontur mindestens eines weiteren Tanks (3) angepasst ist.

4. Flurförderzeug nach einem der Ansprüche 1 bis 3, **dadurch gekennzeichnet, dass** der Formkörper (10, 15, 19, 21) mindestens eine Ausnehmung (11, 16, 22) mit zumindest annähernd kreisbogenförmigem Querschnitt zur Aufnahme mindestens eines Tanks (3) aufweist.

5. Flurförderzeug nach einem der Ansprüche 1 bis 4, **dadurch gekennzeichnet, dass** in der Ausnehmung (11, 16, 22) zur Aufnahme des Tanks (3) mindestens ein elastisches Element (20) angeordnet ist.

6. Flurförderzeug nach einem der Ansprüche 1 bis 5, **dadurch gekennzeichnet, dass** der Formkörper (10, 15, 19, 21) aus einem Eisenwerkstoff, insbesondere Stahl oder Gusseisen, gebildet ist.

7. Flurförderzeug nach einem der Ansprüche 1 bis 6, **dadurch gekennzeichnet, dass** der Formkörper (10, 15, 19, 21) aus einer Bleilegierung gebildet ist.

8. Flurförderzeug nach einem der Ansprüche 1 bis 7, **dadurch gekennzeichnet, dass** der Formkörper (10, 15, 19, 21) mindestens eine zumindest annähernd ebene Seitenfläche (12, 17) aufweist.

9. Flurförderzeug nach einem der Ansprüche 1 bis 8, **dadurch gekennzeichnet, dass** der Formkörper (10, 15, 19, 21) mindestens zwei zumindest annähernd parallele Seitenflächen (17) aufweist.

10. Flurförderzeug nach einem der Ansprüche 1 bis 9, **dadurch gekennzeichnet, dass** der Formkörper (10, 15, 19, 21) mindestens eine Befestigungsvorrichtung zur Verbindung des Formkörpers (10, 15, 19, 21) mit dem Flurförderzeug (1) aufweist.

## Claims

1. Electrically operated industrial truck (1) with a counterweight (5) arranged in the rear region, a housing compartment (8), which is arranged between a front axle (6) and a rear axle (7), and with at least one pressurized tank (3), in particular for conveying fuel which is gaseous under normal conditions, the tank (3) being a hydrogen tank, **characterized in that** at least one moulding (10, 15, 19, 21) is provided, said moulding being matched to essential parts of the outer contour of the tank (3) and being formed from a material with a high density, the tank (3) being accommodated in the moulding (10, 15, 19, 21) and the moulding (10, 15, 19, 21), which is provided with the tank (3), and a fuel cell unit (2) being arranged in the housing compartment (8).

2. Industrial truck according to Claim 1, **characterized in that** the moulding (10, 15, 19, 21) is matched to the contour of components (2, 13, 14) surrounding the tank (3).

3. Industrial truck according to Claim 1 or 2, **characterized in that** the moulding (10, 15, 19, 21) is matched to essential parts of the outer contour of at least one further tank (3).

4. Industrial truck according to one of Claims 1 to 3, **characterized in that** the moulding (10, 15, 19, 21) has at least one cutout (11, 16, 22) with a cross section which is at least approximately in the form of a circular arc for accommodating at least one tank (3).

5. Industrial truck according to one of Claims 1 to 4, **characterized in that** at least one elastic element (20) is arranged in the cutout (11, 16, 22) for accommodating the tank (3).

6. Industrial truck according to one of Claims 1 to 5, **characterized in that** the moulding (10, 15, 19, 21) is formed from an iron material, in particular steel or cast iron.

7. Industrial truck according to one of Claims 1 to 6, **characterized in that** the moulding (10, 15, 19, 21) is formed from a lead alloy.

8. Industrial truck according to one of Claims 1 to 7, **characterized in that** the moulding (10, 15, 19, 21) has at least one at least approximately planar lateral face (12, 17).

9. Industrial truck according to one of Claims 1 to 8, **characterized in that** the moulding (10, 15, 19, 21) has at least two at least approximately parallel lateral faces (17).

10. Industrial truck according to one of Claims 1 to 9, **characterized in that** the moulding (10, 15, 19, 21) has at least one fastening apparatus for connecting the moulding (10, 15, 19, 21) to the industrial truck (1).

## Revendications

1. Chariot élévateur (1) à propulsion électrique, doté d'un contrepoids (5) disposé au niveau arrière, un compartiment de caisson (8) disposé entre un essieu avant (6) et un essieu arrière (7) et d'au moins un réservoir (3) apte à être mis sous pression, en particulier pour emporter un carburant gazeux en conditions normales, le réservoir (3) étant un réservoir à hydrogène,
**caractérisé en ce que**
au moins un corps façonné (10, 15, 19, 21) dont la forme est adaptée à des parties essentielles du contour extérieur du réservoir (3) est prévu et est formé d'un matériau de forte densité, le réservoir (3) étant repris dans le corps façonné (10, 15, 19, 21) et le corps façonné (10, 15, 19, 21) doté du réservoir (3) étant disposé dans le compartiment (8) du caisson en même temps qu'une unité (2) de cellules à combustible.

2. Chariot élévateur selon la revendication 1, **caractérisé en ce que** le corps façonné (10, 15, 19, 21) est adapté au contour des composants (2, 13; 14) qui entourent le réservoir (3).

3. Chariot élévateur selon les revendications 1 ou 2, **caractérisé en ce que** le corps façonné (10, 15, 19, 21) est adapté à des parties essentielles du contour extérieur d'au moins un autre réservoir (3).

4. Chariot élévateur selon l'une des revendications 1 à 3, **caractérisé en ce que** le corps façonné (10, 15, 19, 21) présente au moins une découpe (11, 16, 22) dont la section transversale au moins approximativement en arc de cercle permet de reprendre au moins un réservoir (3).

5. Chariot élévateur selon l'une des revendications 1 à 4, **caractérisé en ce qu'**au moins un élément élastique (20) est disposé dans la découpe (11, 16, 22) destiné à reprendre le réservoir (3).

6. Chariot élévateur selon l'une des revendications 1 à 5, **caractérisé en ce que** le corps façonné (10, 15, 19, 21) est formé d'un matériau ferreux, en particulier l'acier ou la fonte.

7. Chariot élévateur selon l'une des revendications 1 à 6, **caractérisé en ce que** le corps façonné (10, 15, 19, 21) est formé d'un alliage au plomb.

8. Chariot élévateur selon l'une des revendications 1 à 7, **caractérisé en ce que** le corps façonné (10, 15, 19, 21) présente une surface latérale (12, 17) au moins approximativement plane.

9. Chariot élévateur selon l'une des revendications 1 à 8, **caractérisé en ce que** le corps façonné (10, 15, 19, 21) présente au moins deux surfaces latérales (17) au moins approximativement parallèles.

10. Chariot élévateur selon l'une des revendications 1 à 9, **caractérisé en ce que** le corps façonné (10, 15, 19, 21) présente au moins un dispositif de fixation qui permet de relier le corps façonné (10, 15, 19, 21) à un chariot élévateur (1).
